# EUROPEAN PATENT APPLICATION

(11) **EP 2 293 533 A1**
(43) Date of publication of application: **09.03.2011**
(21) Application number: 10174671.7
(22) Date of filing: 31.08.2010
(51) Int. Cl.: H04M 1/725, G06F 3/048

(54) **Mobile terminal for displaying composite menu information**

(30) Priority: 08.09.2009 KR 20090084563
(71) Applicant: Pantech Co., Ltd., Seoul 121-792 (KR)
(72) Inventor: Lim, Song, 121-765, Seoul (KR); Ko, Jung Suk, 142-060, Seoul (KR)
(74) Representative: Herzog, Markus

(57) **Abstract**

A mobile terminal to display composite menu information generated by grouping a plurality of menu items includes a display unit to display menu information; a memory unit to store composite menu information generated by grouping a plurality of menu items; and a 5control unit to control composite menu item corresponding to a plurality of menu items selected by a user's instruction to be displayed on the display unit.

## Description

### CROSS-REFERENCE TO RELATED APPLICATION

This application claims priority from and benefit of Korean Patent Application No. 10-2009-0084563, filed on September 8, 2009, the entire disclosure of which is incorporated herein by reference for all purposes.

### BACKGROUND

1. Field

The following description relates to a mobile terminal to display composite menu information generated by grouping a plurality of menu items.

2. Discussion of the Background

With the rapid development of mobile telecommunication technologies and related infrastructures, mobile terminals have been developed as media for providing various services such as a voice communication service, game service, a message transmission/reception service, an internet search service, a wireless data communication service, an electronic scheduling service, a digital camera service, a video telephony service, and the like.

Recently, as users' demands on services for improved service qualities and functions increase, attempts for improving users' convenience have been made by introducing graphical user interfaces (GUI) that are similar to those adopted in personal computers (PC) and touch panels to mobile terminals.

A mobile terminal having a touch panel that is a GUI device accepts touch inputs and may not have a keypad that is generally used to accept inputs. In the touch panel, an instruction specified by a user is inputted by generating a predetermined voltage or current signal at a position pressed by a touch pen, a finger, or the like.

However, generally, a touch panel simply serves as a keypad in a mobile terminal and performs an instruction inputted by a user. Therefore, improving users' convenience is needed.

### SUMMARY

Exemplary embodiments provide a mobile terminal to display composite menu information having features of respective menus reflected or newly generated by grouping a plurality of menu items.

Additional features of the invention will be set forth in the description which follows, and in part will be apparent from the description, or may be learned by practice of the invention.

An exemplary embodiment discloses a mobile terminal comprising a display unit to display menu information; a memory unit to store composite menu information generated by grouping a plurality of menu items; and a control unit to control the display unit to display a composite menu item corresponding to the composite menu information.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a block diagram illustrating a mobile terminal according to an exemplary embodiment of the present invention;

FIG. 2 is a flowchart illustrating a method for grouping a plurality of menu items according to an exemplary embodiment of the present invention;

FIG. 3A, FIG. 3B, and FIG. 3C are views illustrating mobile terminals in which a plurality of menu items are selected according to exemplary embodiments of the present invention;

FIG. 4 is a view illustrating a mobile terminal in which a composite icon is deleted according to an exemplary embodiment of the present invention; and

FIG. 5 is a view illustrating a mobile terminal in which an application for generated composite menu information is executed according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments are shown. This invention may, however, be embodied in many different forms and should not be construed as limited to the exemplary embodiments set forth therein. Rather, these exemplary embodiments are provided so that this disclosure will be thorough, and will fully convey the scope of the invention to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals denote like elements. The shape, size, and regions, and the like, of the drawing may be exaggerated for clarity.

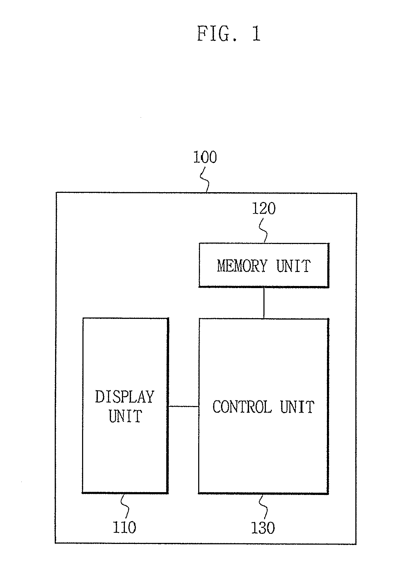

FIG. 1 is a block diagram illustrating a mobile terminal according to an exemplary embodiment of the present invention. Referring to FIG. 1, a mobile terminal 100 includes a display unit 110, a memory unit 120, and a control unit 130.

The display unit 110 displays menu information and/or information processed in the mobile terminal 100. The display unit 110 may include a touch panel. In the touch panel, touch sensors to sense touch operations may have an interlayer structure and may simultaneously be an output device and an input device. The touch sensor may have the form of a touch film, a touch sheet, a touch pad, or the like. The touch sensor may receive an inputted signal by converting a change in pressure applied to a surface of the touch panel or by converting a change in capacitance at a specific position of the touch panel into an electrical input signal. The display unit 110 including a touch panel may be an input display unit that receives an inputted instruction and that displays information according to a control signal generated in the mobile terminal 100.

The display unit 110 may display information as various forms, including a block design, a text design, a circular design, and the like. The display unit 110 may further display icons, including a grouping icon, a delete icon, a composite icon, and menu icons, among others. The composite icon is an icon including a plurality of menu items or icons selected through various methods. The display unit 110 may display the delete icon to execute a delete function so that a user may select the delete icon to delete a composite icon or other icons. If composite menu information is generated, the display unit 110 may further display the composite icon to directly display the generated composite menu information or change a current screen into a screen on which the generated composite menu information is displayed.

The memory unit 120 stores the composite menu information generated by grouping a plurality of menu items. The memory unit 120 may include a storage medium including one or more of a flash memory type memory, a hard disk type memory, a multimedia card micro type memory, a card type memory, a random access memory (RAM), a static random access memory (SRAM), a read-only memory (ROM), an electrically erasable read-only memory (EEPROM), a programmable read-only memory (PROM), a magnetic memory, a magnetic disk, or an optical disk, or combinations thereof.

The composite menu information may be menu information generated by grouping two or more menu items displayed on a menu screen of the mobile terminal 100. In addition to the menu items displayed on the initial menu screen, a menu item generated by grouping menu items may be used as the composite menu information. The grouping method may include a method of determining menu items so that menus or icons associated from corresponding menu functions or icons are grouped by considering each of the menu or icon functions to be grouped, a method of specifying menus grouped according to user's preferences, or the like. The composite menu information may be generated through a method of grouping instructions respectively included in menu items or icons to generate a macro for the composite menu item. The composite menu information may be displayed by generating a composite icon associated with the composite menu item. The composite menu information may contain subordinate menu information classified for each category and application information to perform each of the menu or icon functions. The method of grouping composite menu information stored in the memory unit 120 may be determined by a user's instruction. Specifically, the composite menu information may be generated through a method of storing a plurality of menu items to be grouped and a composite item generated by grouping the plurality of menu items in the memory unit 110 of the mobile terminal 100 according to user's preferences.

The control unit 130 generally controls operations of the mobile terminal 100. For example, the control unit 130 may perform and/or control voice calls, data communications, video calls, and the like. The control unit 130 may control the composite menu information generated by grouping a plurality of menu items or icons selected by a user to be displayed on the display unit 110, using information stored in the memory unit 120. The composite menu information may include a composite icon through which a user may call or execute the composite menu information. The control unit 130 may control the composite icon to be displayed so that the composite menu information may be accessed on the display unit 110 or may be changed into a screen on which the composite menu information or a list is displayed. The composite menu information may further include subordinate menus, subordinate items, and the like. If composite menu information including subordinate menus is selected, the control unit 130 may control a list of the subordinate menus to be displayed so that applications of the subordinate menus may be executed. If a subordinate menu is selected by a user, the control unit 130 may execute an application corresponding to the selected subordinate menu. According to applications, the control unit 130 may control the shape and color of the composite icon, the position at which the composite icon is displayed, and the like. According to user's instructions, the control unit 130 may change a design of the composite icon or may control the composite icon to be displayed by moving the position of the composite icon.

As examples of composite menu information generated according to functions of menu items, a video call menu may be generated by grouping menu items having call and camera functions, and a text message menu may be generated by grouping a call menu and a text menu. In addition, a wireless internet menu may be generated by grouping a call menu and a provider's service menu; a scheduler menu may be generated by grouping a clock menu and a text menu; and an alarm menu may be generated by grouping a voice menu and a clock menu. Further, three or more menus may be grouped. As an example of a composite menu generated by grouping three menus, a video chatting menu may be generated by grouping a call menu, a camera menu, and a text menu. The grouping method may include a method of generating a menu associated with functions of menus to be grouped or a method of generating a menu specified according to user's settings. The number of menus to be grouped, the content of a composite menu item, and the grouping method, and the like may be varied.

The control unit 130 may recognize an operation signal inputted through various methods as a select input for a plurality of menu items. For example, if the display unit 110 includes a touch panel and a drag signal is inputted from an area of a first menu item to an area of a second menu item, the control unit 130 recognizes the drag signal as a grouping signal for the first and second menu items and generates composite menu information generated by grouping the first and second menu items. The composite menu information may be displayed on the display unit 110 as a composite icon. In order to reduce an error range of user's touch, the control unit 130 may recognize a selection signal in an area as a signal corresponding to selecting a menu item.

The display unit 110 may further display a grouping icon to perform a grouping function. In this case, if two or more menu items are dragged onto the grouping icon, the control unit 130 may recognize the drag signal as a signal to indicate that the menu items dragged onto the grouping icon are selected, generate composite menu information by grouping the corresponding menu items, and display the composite menu information as a composite icon on the display unit 110.

The display unit 110 may further display a grouping icon to activate a grouping function with respect to menu items for a reference time. In this case, if a selection signal is inputted and the grouping function is activated by the grouping icon, the control unit 130 may recognize the selection signal as a signal to select a plurality of menu items, generate composite menu information by grouping the selected menu items, and display the composite menu information as a composite icon on the display unit 110. The control unit 130 may receive a selection signal inputted through a number pad as a grouping signal for a plurality of menu items to be grouped. Specifically, numbers may be associated with menu items displayed in the mobile terminal 100, respectively. If a plurality of numbers are inputted together with a grouping signal, the control unit 130 may recognize the inputted numbers as the grouping signal and select a plurality of menu items respectively associated with the inputted numbers, generate composite menu information generated by grouping the selected menu items, and display the composite menu information as a composite icon on the display unit 110.

The control unit 130 may delete a composite icon by a user's instruction. The display unit 110 may further display a delete icon to call or execute a delete function. If the composite icon representing composite menu information is dragged onto the delete icon, the control unit 130 may recognize the drag signal as a delete signal for the composite icon and delete the corresponding composite menu information. In order to protect menu items from being deleted, the range of menu items to be deleted may be limited to the composite icon or menu item. When a delete signal for a menu item is inputted, the control unit 130 may perform a warning function to indicate that the menu item cannot be deleted or to confirm that the menu item is to be deleted. For example, the warning function may include a message "delete impossible," a vibration motion, a warning voice, and the like.

The composite menu information may contain a state information menu for displaying a state of the mobile terminal 100. The state information menu may be a display area in which a connection state, settings of the mobile terminal 100, a battery, and the like, which are displayed according to a user's preference, are displayed on a standby screen of the mobile terminal 100. If the state information menu and one or more other menu items are selected, the control unit 130 may generate composite menu information containing the state information menu to be displayed on the display unit 110 as a composite icon. For example, if a battery menu and a telephone menu are selected, the control unit 130 may control information on a call time available with current power remaining in a battery of the mobile terminal 100, and the like, to be displayed on the display unit 110.

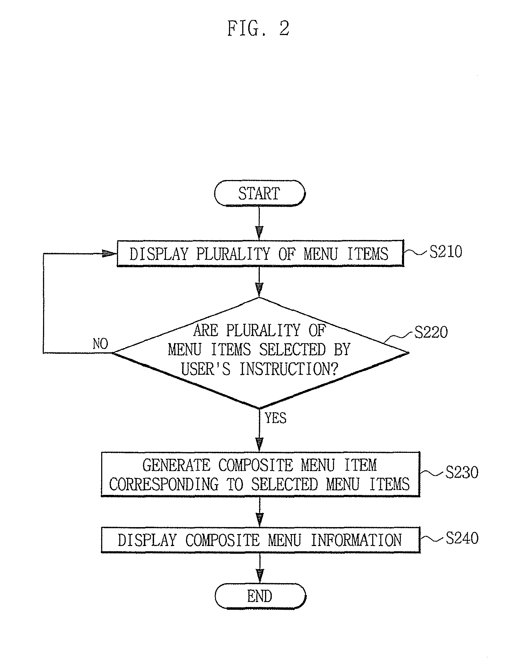

FIG. 2 is a flowchart illustrating a method for grouping a plurality of menu items according to an exemplary embodiment of the present invention. Referring to FIG. 2, a plurality of menu items are displayed on a display screen of a mobile terminal (S210). Each of the menu items may be an icon or a menu icon. Further, each of the menu items may represent menus, functions, applications, programs, sub-routines, shortcuts, and the like. If a plurality of menu items are selected (S220), a composite menu item corresponding to the selected menu items is generated (S230). The composite menu item may be a composite icon. As a result, composite menu information generated as described above may be displayed on a display unit of the mobile terminal, or a composite menu icon to call the composite menu information may be displayed on the display unit (S240).

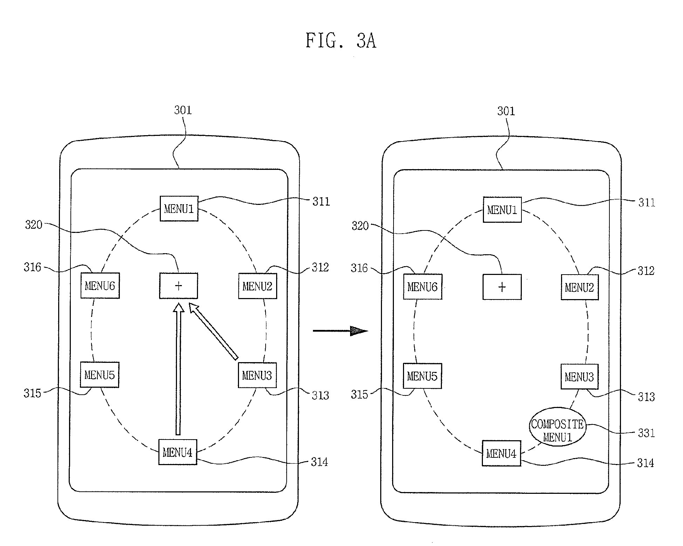

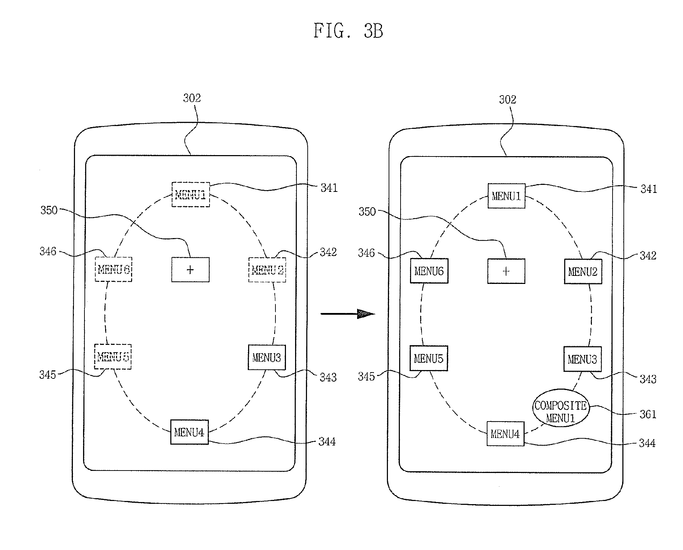

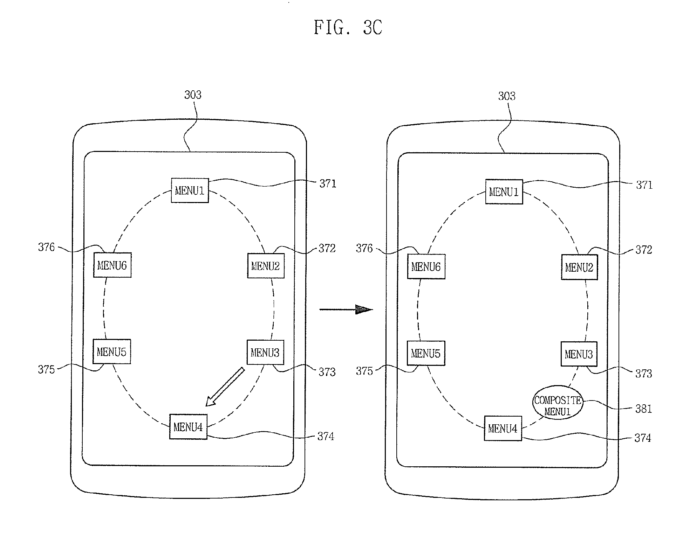

FIG. 3A, FIG. 3B, and FIG. 3C are views illustrating mobile terminals in which a plurality of menu items are selected according to exemplary embodiments of the present invention.

FIG. 3A is a view illustrating a mobile terminal in which a plurality of icons are selected by dragging the plurality of menu items onto a grouping icon. FIG. 3B is a view illustrating a mobile terminal in which a plurality of icons activated by a grouping icon are selected. FIG. 3C is a view illustrating a mobile terminal in which a plurality of icons are selected through a drag signal between the icons.

Referring to FIG. 3A, first to sixth icons 311, 312, 313, 314, 315, and 316 and a grouping icon 320 to perform a grouping function are displayed on a display screen 310A of a mobile terminal 301. Each of the first to sixth icons 311, 312, 313, 314, 315, and 316 may be menu icons or menu items. Further, each of the first to sixth icons 311, 312, 313, 314, 315, and 316 may represent menus, functions, applications, programs, sub-routines, shortcuts, and the like. If the third and fourth icons 313 and 314 are dragged onto the grouping icon 320, the mobile terminal 301 generates and displays a composite icon 331 to call composite menu information generated by grouping the third and fourth menus 313 and 314. The composite icon 331 may be a composite menu icon. Thus, the composite icon 331 through which a user can call the composite menu information generated by grouping the third and fourth icons 313 and 314 is displayed between the third and fourth icons 313 and 314 on a display screen 310B of the mobile terminal 301.

Referring to FIG. 3B, first to sixth icons 341, 342, 343, 344, 345, and 346 and a grouping icon 350 to activate a grouping function are displayed on a display screen 340A of a mobile terminal 302. Each of the first to sixth icons 341, 342, 343, 344, 345, and 346 may be menu icons or menu items. Further, each of the first to sixth icons 341, 342, 343, 344, 345, and 346 may represent menus, functions, applications, programs, sub-routines, shortcuts, and the like. If the grouping icon 350 is selected, the first to sixth icons 341, 342, 343, 344, 345, and 346 are activated with respect to the grouping function for a reference time. If the third and fourth icons 343 and 344 are selected within the reference time, the mobile terminal 302 generates and displays a composite icon 361 to call composite menu information generated by grouping the third and fourth icons 343 and 344. The composite icon 361 may be a composite menu icon. Thus, the composite icon 361 through which a user can call the composite menu information generated by grouping the third and fourth menus 343 and 344 is displayed between the third and fourth icons 343 and 344 on a display screen 340B of the mobile terminal 302.

Referring to FIG. 3C, first to sixth icons 371, 372, 373, 374, 375, and 376 are displayed on a display screen 370A of a mobile terminal 303. Each of the first to sixth icons 371, 372, 373, 374, 375, and 376 may be menu icons or menu items. Further, each of the first to sixth icons 371, 372, 373, 374, 375, and 376 may represent menus, functions, applications, programs, sub-routines, shortcuts, and the like. If a drag signal is inputted from an area of the third icon 373 to an area of the fourth icon 374, the mobile terminal 303 generates and displays a composite icon 381 to call composite menu information generated by grouping the third and fourth menus 373 and 374. The composite icon 381 may be a composite menu icon. Thus, the composite icon 381 through which a user can call the composite menu information generated by grouping the third and fourth menus 373 and 374 is displayed between the third and fourth icons 373 and 374 on a display screen 370B of the mobile terminal 303.

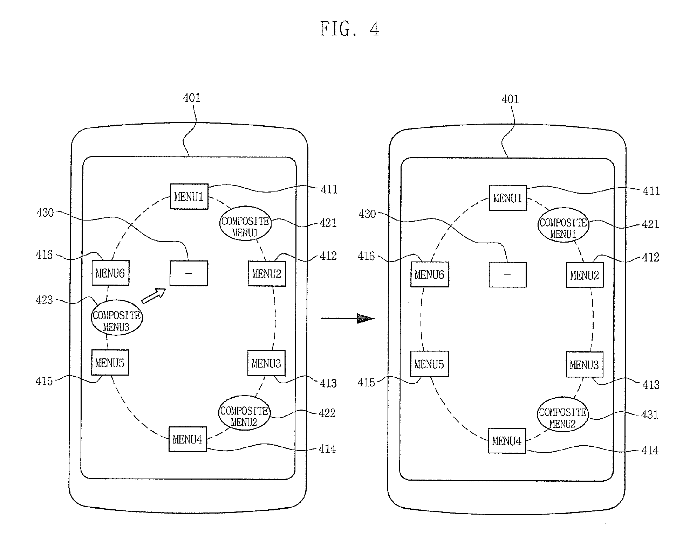

FIG. 4 is a view illustrating a mobile terminal in which a composite icon is deleted according to an exemplary embodiment of the present invention. Referring to FIG. 4, first to sixth initial icons 411, 412, 413, 414, 415, and 416, first to third composite icons 421, 422, and 423 and a delete icon 430 to delete information are displayed on a display screen 410A of a mobile terminal 401. Each of the first to sixth initial icons 411, 412, 413, 414, 415, and 416 may be menu icons or menu items. Further, each of the first to sixth initial icons 411, 412, 413, 414, 415, and 416 may represent menus, functions, applications, programs, sub-routines, shortcuts, and the like. And, each of the first to third composite icons 421, 422, and 423 may be composite menu icons. If the third composite icon 423 of the first to third composite icons 421, 422, and 423 is dragged onto the delete icon 430, the third composite icon 423 is deleted and no longer displayed on a display screen 410B of the mobile terminal 401. Thus, the first to sixth initial icons 411, 412, 413, 414, 415, and 416 and the first and second composite icons 421 and 422, which are not deleted, are displayed on the display screen 410B of the mobile terminal 401.

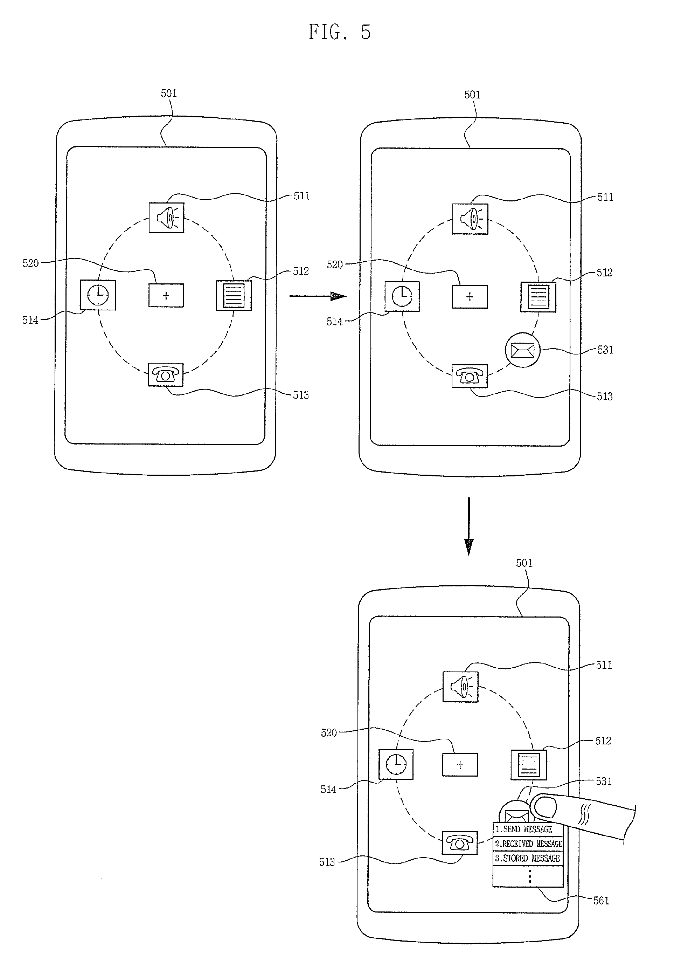

FIG. 5 is a view illustrating a mobile terminal in which an application for generated composite menu information is executed according to an exemplary embodiment of the present invention. Referring to FIG. 5, a mobile terminal 501 includes a display screen 510A on which a plurality of icons are displayed, a display screen 510B on which a composite icon is displayed, and a display screen 510C on which application information contained in the composite icon is displayed.

A voice icon 511, a text icon 512, a call icon 513, a clock icon 514 and a grouping icon 520 are displayed as initial menu items on the display screen 510A of the mobile terminal 501. Each of the voice icon 511, the text icon 512, the call icon 513, and the clock icon 514 may be menu icons or menu items. Further, each of the voice icon 511, the text icon 512, the call icon 513, and the clock icon 514 may represent menus, functions, applications, programs, sub-routines, shortcuts, and the like. If the text icon 512 and the call icon 513 of the initial menu items are selected and grouped by a user's instruction, a message icon 531, i.e., a composite icon generated by grouping the text icon 512 and the call icon 513, is displayed on the display screen 510B of the mobile terminal 501. A list of applications of a subordinate menu 561 contained in the message icon 531, i.e., the composite menu information, is displayed on the display screen 510C of the mobile terminal on which the message icon 531 is selected by an object for inputting the user's instruction. The subordinate menu may be set to be displayed translucently.

The mobile terminal according to exemplary embodiments of the present invention may not be limited to the configuration and methods of the aforementioned exemplary embodiments but configured by selectively combining all or some of the exemplary embodiments so that various modifications can be made.

As described above, in a mobile terminal according to exemplary embodiments of the present invention, menus displayed in the mobile terminal can be simplified, and user's convenience can be improved by configuring and displaying menus according to a user's preferences.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile terminal to display composite menu information generated by grouping a plurality of menu items includes a display unit to display menu information; a memory unit to store composite menu information generated by grouping a plurality of menu items; and a control unit to control composite menu item corresponding to a plurality of menu items selected by a user's instruction to be displayed on the display unit.

## Claims

1. A mobile terminal, comprising:
a display unit to display menu items;
a memory unit to store composite menu information generated by grouping a plurality of menu items; and
a control unit to control the display unit to display a composite menu item corresponding to the grouped plurality of menu items.

2. The mobile terminal of claim 1, wherein the display unit comprises a touch panel.

3. The mobile terminal of claim 1 or 2, wherein, if a composite menu item is selected, the control unit executes an application included in the selected composite menu information.

4. The mobile terminal of any of claims 1 to 3, wherein the composite menu information stored in the memory unit is determined according to a user's instruction.

5. The mobile terminal of any of claims 2 to 4, wherein, if a grouping signal is inputted in the form of a touch or drag from an area of a first menu item to an area of a second menu item, the control unit generates the composite menu information by grouping the first menu item and the second menu item, and the control unit controls the display unit to display the composite menu item corresponding to the first menu item and the second menu item.

6. The mobile terminal of any of claims 2 to 5, wherein the display unit further displays a grouping icon to execute a grouping function, the control unit generates the composite menu information by grouping a plurality of menu items selected through a touch or drag input to the composite icon, and the control unit controls the display unit to display the composite menu item corresponding to the grouped plurality of menu items.

7. The mobile terminal of any of claims 1 to 6, wherein the display unit further displays a grouping icon to activate a grouping function with respect to menu items for a reference time, the control unit generates the composite menu information by grouping a plurality of menu items selected within the reference time, and the control unit controls the display unit to display the composite menu item corresponding to the selected plurality of menu items.

8. The mobile terminal of any of claims 2 to 7, wherein the display unit further displays a delete icon to perform a delete function, the control unit controls composite menu item selected through a touch or drag input of the composite menu item to the delete icon to be deleted from the display unit,
wherein it is preferred that, if a menu item is selected, the control unit performs a warning function.

9. The mobile terminal of any of claims 1 to 8, wherein the memory unit further stores composite state information generated by grouping a state information menu of the mobile terminal and one or more menu items, and if the state information menu and the one or more menu items are selected, the control unit controls the display unit to display the composite state information stored in the memory unit.

10. The mobile terminal of any of claims 1 to 9, wherein the plurality of menu items comprises:
a voice icon, a text icon, a call icon, and a clock icon.

11. The mobile terminal of any of claims 1 to 10, wherein the composite menu item comprises at least one of the following:
a composite icon,
a message icon comprising the text icon and the call icon,
a video call menu comprising a call menu item and a camera menu item,
a wireless internet menu item comprising a call menu item and a provider's service menu item,
a scheduler menu item comprising a clock menu item and a text menu item,
an alarm menu item comprising a voice menu item and a clock menu item,
a video chatting menu item comprising a call menu item, a camera menu item, and a text menu item,
a subordinate menu, and the control unit executes an application corresponding to a selected subordinate menu item.

12. A method of displaying composite menu information, the method comprising:
displaying a plurality of menu items on a mobile terminal;
generating a composite menu item according to an input; and
displaying the composite menu item on the mobile terminal.

13. The method of claim 12, further comprising:
displaying a grouping icon on the mobile terminal,
wherein the input comprises:
dragging at least one of the plurality of menu items to the grouping icon or
selecting the grouping icon to activate each of the plurality of menu items, and selecting at least one of the plurality of activated menu items to be grouped.

14. The method of claim 12 or 13, wherein the input comprises dragging one of the plurality of menu items to another one of the plurality of menu items.

15. The method of any of claims 12 to 14, further comprising:
displaying a delete icon on the mobile terminal; and
dragging a composite menu item to the delete icon to delete the composite menu item.
